# EUROPEAN PATENT APPLICATION

(11) **EP 3 845 785 A1**
(43) Date of publication of application: **07.07.2021**
(21) Application number: 19855101.2
(22) Date of filing: 09.08.2019
(51) Int. Cl.: F16J 15/44, F16C 19/18, F16C 33/78, F16J 15/3232, F16J 15/447

(54) **SEALING DEVICE**

(30) Priority: 28.08.2018 JP 2018159414
(71) Applicant: NOK Corporation, Minato-ku, Tokyo 105-8585 (JP)
(72) Inventor: SAKANO Yuya, Fukushima-shi, Fukushima 960-1193 (JP); SUGAWARA Shintaro, Fukushima-shi, Fukushima 960-1193 (JP)
(74) Representative: Global IP Europe Patentanwaltskanzlei
(86) International application number: PCT/JP2019/031762
(87) International publication number: WO 2020/045073

(57) **Abstract**

A sealing device disposed between inner and outer members that rotate relative to each other, and that acts to seal a gap between the inner and outer members, and includes a first sealing member to be mounted to the outer member and a second sealing member to be mounted to the inner member. An annular circular protrusion that protrudes toward an annular part of the first sealing member is supported by the second sealing member, and multiple water-discharge protrusions protrude from an inclined surface of circular protrusion. The water-discharge protrusions are arranged in a circumferential direction. Each protrusion includes an inclined side surface that intersects at an acute angle with a rotational direction in which at least one of the inner member and the outer member rotates.

## Description

### TECHNICAL FIELD

The present invention relates to sealing devices.

### BACKGROUND ART

Rolling bearings, such as ball bearings are well known and are used, for example, in automotive vehicle hubs. In Patent Document 1, there is disclosed a sealing device that seals an inside of a rolling bearing. The sealing device has an annular body that is fixed to an outer race of the rolling bearing, a radial lip (grease lip) that extends radially inward from the annular body, and two side lips (axial lips) that extend laterally from the annular body. The radial lip is in contact with an outer peripheral surface of the inner race of the bearing or with an outer peripheral surface of a part that is fixed to the inner race of the bearing, and acts as a seal to contain a lubricant (grease) inside the bearing. The two side lips are in contact with a flange of the inner race, and act as a seal to prevent foreign matter, such as water and dust, entering from the exterior into the interior of the bearing.

### BACKGROUND DOCUMENTS

### Patent Document

Patent Document 1: JP-B-3991200

### SUMMARY OF THE INVENTION

With regard to the type of sealing device described, a need exists to enhance prevention of entry of water (including muddy water or salt water) into the interior of a sealed object (e.g., a bearing) when the sealing device is used in a wet environment. Furthermore, in the event that water does enter the sealing device, a need exists to enable rapid discharge of the water.

To meet these needs, the present invention provides a sealing device that has a superior ability to prevent entry of water into the sealed object and to rapidly discharge any water that does enter the sealed object.

According to an aspect of the present invention, a sealing device is disposed between an inner member and an outer member that rotate relative to each other, and acts to seal a gap between the inner member and the outer member, including: a first sealing member to be mounted to the outer member, the first sealing member including an annular part that extends radially inward toward the inner member; and a second sealing member to be mounted to the inner member, the second sealing member including a flange part that extends radially outward and faces the annular part of the first sealing member, an annular circular protrusion being supported by the second sealing member and protruding toward the annular part of the first sealing member, the circular protrusion including an inclined surface, such that a more radially inward a position is of the inclined surface, a more distant the position is from the flange part of the second sealing member, multiple water-discharge protrusions protruding from the inclined surface of the circular protrusion into a space between the annular part of the first sealing member and the flange part of the second sealing member and being arranged in a circumferential direction, each of the water-discharge protrusions including an inclined side surface that intersects at an acute angle with a rotational direction in which at least one of the inner member and the outer member rotates.

In this sealing device, water may enter a space between the annular part of the first sealing member and the flange part of the second sealing member. However, there are provided water-discharge protrusions that protrude into the space, and each of the water-discharge protrusions has an inclined side surface that intersects at an acute angle with a rotational direction of at least one of the inner member and the outer member. By this configuration, under relative rotation of the inner member and the outer member, the water in the space is caused to flow in an opposing direction along the inclined side surface and is rapidly discharged from the space. Accordingly, the sealing device provides a superior protective effect for the sealed object against water. Furthermore, since the water-discharge protrusions protrude into the space between the annular part of the first sealing member and the flange part of the second sealing member, there is no need to increase a size of the sealing device to accommodate the water-discharge protrusions. Since the water-discharge protrusions protrude from the inclined surface of the circular protrusion supported by the second sealing member, it is unlikely that foreign matter will enter the space between the annular part and the flange part from the outside. Furthermore, the more radially outward a position of the inclined surface of the circular protrusion is, the closer to the flange the position is, and as a result a superior ability to discharge water is provided.

### BRIEF DESCRIPTION OF THE DRAWINGS

Fig. 1 is a partial cross-sectional view of an example of a rolling bearing in which a sealing device according to any one of the embodiments of the present invention is used;
Fig. 2 is a partial cross-sectional view of a sealing device according to a first embodiment of the present invention:
Fig. 3 is a front view of a second sealing member of the sealing device according to the first embodiment;
Fig. 4 is a cross-sectional view taken along line IV-IV in Fig. 3;
Fig. 5 is a perspective view of the second sealing member of the sealing device according to the first embodiment;
Fig. 6 is a diagram showing advantages of the sealing device according to the first embodiment upon start of rotation of the second sealing member;
Fig. 7 is a diagram showing advantages of the sealing device according to the first embodiment upon stop of rotation of the second sealing member;
Fig. 8 is a partial cross-sectional view of a sealing device according to a second embodiment of the present invention;
Fig. 9 is a cross-sectional view of a second sealing member of the sealing device according to the second embodiment;
Fig. 10 is a diagram showing advantages of the sealing device according to the second embodiment upon stop of rotation of the second sealing member;
Fig. 11 is a partial cross-sectional view of a sealing structure according to a third embodiment of the present invention; and
Fig. 12 is a partial cross-sectional view of a sealing structure according to a fourth embodiment of the present invention.

### DESCRIPTION OF EMBODIMENTS

Hereinafter, with reference to the accompanying drawings, multiple embodiments according to the present invention will be described. It is of note that the drawings are not necessarily to scale, and certain features may be depicted in exaggerated form or may be omitted.

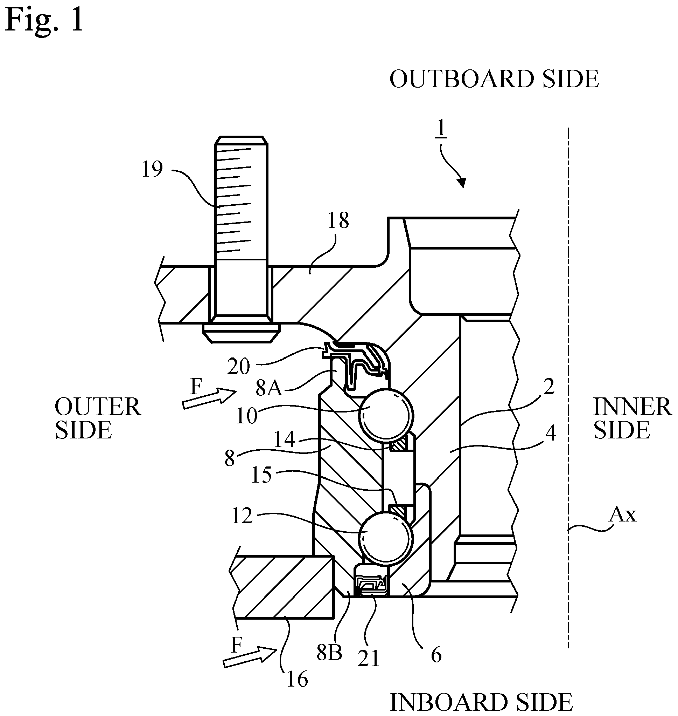

Fig. 1 shows an automotive vehicle hub bearing, which is an example of a rolling bearing in which a sealing device according to any one of the embodiments of the present invention is used. The present invention is not limited to hub bearings, and is applicable to other types of rolling bearings. In the following description, the hub bearing is a ball bearing. Again, the present invention is not limited to ball bearings, and is applicable to other types of rolling bearings, such as roller bearings and needle bearings, and other types of rolling elements. The present invention is also applicable to rolling bearings used in machines other than automotive vehicles.

The hub bearing 1 includes a hub 4 (inner member) that has a hole 2 into which a spindle (not shown) is inserted, an inner race 6 (inner member) attached to the hub 4, an outer race 8 (outer member) located outside of the hub 4 and the inner race 6, multiple balls 10 arranged in a row between the hub 4 and the outer race 8, multiple balls 12 arranged in a row between the inner race 6 and the outer race 8, and multiple retainers 14 and 15 that retain the balls in place.

Whereas the outer race 8 remains stationary, the hub 4 and the inner race 6 rotate with the spindle.

In Fig. 1, the central axis Ax common to the spindle and hub bearing 1 extends in a vertical direction. In Fig. 1, relative to the central axis Ax only the left part is shown; and although not shown in detail, in Fig. 1 the upper side corresponds to the outer side (outboard side) of the automotive vehicle on which wheels are arranged, while the lower side corresponds to the inner side (inboard side) on which differential gears are arranged. In Fig. 1, the outer side and the inner side are each shown in their respective radial directions.

The outer race 8 of the hub bearing 1 is fixed to the hub knuckle 16. The hub 4 has an outboard side flange 18 that extends radially further outward than the outer race 8. A wheel can be attached to the outboard side flange 18 by hub bolts 19.

A sealing device 20 that seals a gap between the outer race 8 and the hub 4 is located close to the end of the outer race 8 on the outboard side, and inside the end of the outer race 8 on the inboard side. Another sealing device 21 that seals a gap between the outer race 8 and the inner race 6 is located inside the end of the inner side of the outer race 8. The sealing devices 20 and 21 prevent outflow of a lubricant in the form of grease from the inside of the hub bearing 1, and prevent entry of foreign matter (water, including muddy water or salt water) into the interior of the hub bearing 1 from the outside. In Fig. 1, arrows F indicate an example direction of an exterior flow of foreign matter.

The sealing device 20 is located between the rotatable hub 4 and the cylindrical end portion 8A on the outboard side of the stationary outer race 8 of the hub bearing 1, and seals the gap between the outer race 8 and the hub 4. The sealing device 21 is located between the rotatable inner race 6 and the end portion 8B on the inboard side of the outer race 8 of the hub bearing 1, and seals the gap between the outer race 8 and the inner race 6.

### FIRST EMBODIMENT

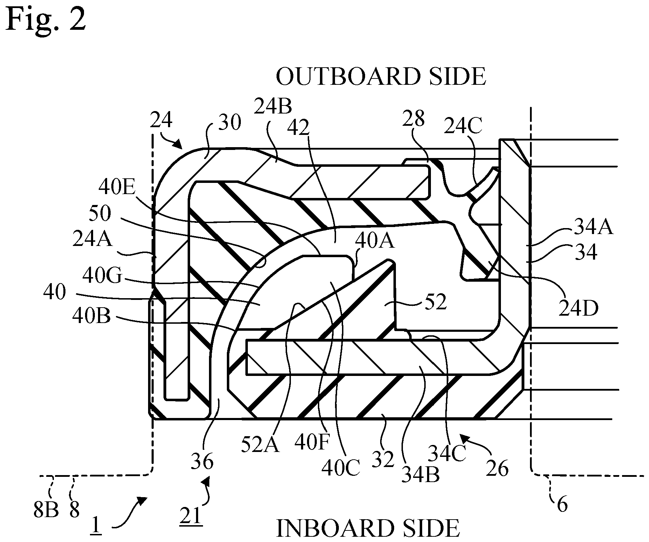

As shown in Fig. 2, the sealing device 21 is provided in a gap between the end portion 8B on the inboard side of the outer race 8 of the hub bearing 1 and the inner race 6 of the hub bearing 1. The sealing device 21 is annular in shape. In Fig. 2 only the left part of the sealing device 21 is shown. As will be apparent from Fig. 2, the sealing device 21 has a composite structure and includes a first sealing member 24 and a second sealing member 26.

The first sealing member 24 is a stationary sealing member that is attached to the outer race 8 and does not rotate. The first sealing member 24 has a composite structure and includes an elastic ring 28 and a rigid ring 30. The elastic ring 28 is made of an elastic material such as an elastomer. The rigid ring 30 is made of a rigid material such as a metal and reinforces the elastic ring 28. As viewed in cross section, the rigid ring 30 is substantially L-shaped. A part of the rigid ring 30 is embedded in the elastic ring 28 and is in close contact with the elastic ring 28.

The first sealing member 24 has a cylindrical part 24A, an annular part 24B, and radial lips 24C and 24D. The cylindrical part 24A constitutes a mounted part that is to be mounted to the outer race 8. More specifically, the cylindrical part 24A is engaged by interference fit, namely, is press-fitted into the end portion 8B of the outer race 8. The annular part 24B, which has a circular annular shape, is located radially inside the cylindrical part 24A and extends radially inward toward the inner race 6. The cylindrical part 24A and the annular part 24B are formed from the rigid ring 30 and the elastic ring 28.

The radial lips 24C and 24D extend from the inner end of the annular part 24B toward the second sealing member 26, and the distal ends of the radial lips 24C and 24D are in contact with the second sealing member 26. The radial lips 24C and 24D are formed from the elastic ring 28.

The second sealing member 26 may also be referred to as a slinger, that is, a rotational sealing member. The second sealing member 26 is mounted to the inner race 6, rotates together with the inner race 6, and acts to deflect exterior splashing of foreign matter.

In this embodiment, the second sealing member 26 also has a composite structure and includes an elastic ring 32 and a rigid ring 34. The rigid ring 34 is made of a rigid material such as a metal.

As viewed in cross section, the rigid ring 34 is substantially L-shaped. The rigid ring 34 includes a cylindrical sleeve part 34A and an annular flange part 34B that extends radially outward from the sleeve part 34A. The sleeve part 34A constitutes a mounted part that is to be mounted to the inner race 6. More specifically, an end portion of the inner race 6 is engaged by interference fit, namely, is press-fitted into the sleeve part 34A.

The flange part 34B is located radially outside the sleeve part 34A, extends radially outward, and faces the annular part 24B of the first sealing member 24. In this embodiment, the flange part 34B is a flat plate and lies on a plane that is perpendicular to the axis of the sleeve part 34A.

The elastic ring 32 is in close contact with the flange part 34B of the rigid ring 34. In this embodiment, the elastic ring 32 serves to measure a rotational speed of the inner race 6. More specifically, the elastic ring 32 is formed from an elastomer material that contains a magnetic metal powder and a ceramic powder, and has a large number of S poles and N poles provided by the magnetic metal powder. In the elastic ring 32, the S poles and N poles are alternately arranged at equiangular intervals in a circumferential direction. The angle of rotation of the elastic ring 32 is measured by use of a magnetic rotary encoder (not shown). Since the material of the elastic ring 32 contains a metal powder, it has a higher degree of hardness than that of conventional elastomer materials and thus is not readily susceptible to damage by foreign matter.

The radial lip 24C of the first sealing member 24 is a grease lip that extends radially inward from the inner end of the annular part 24B. The grease lip 24C extends toward the sleeve part 34A of the second sealing member 26, and the distal end of the grease lip 24C is in contact with the sleeve part 34A. The grease lip 24C extends radially inward toward the outboard side, and has a primary role in preventing outflow of the lubricant from the inside of the hub bearing 1.

The radial lip 24D is a dust lip that extends laterally from the inner end of the annular part 24B. The dust lip 24D extends radially outward toward the inboard side. The dust lip 24D also extends toward the sleeve part 34A of the second sealing member 26, and the distal end of the dust lip 24D is in contact with the sleeve part 34A. The dust lip 24D has a primary role in preventing exterior inflow of foreign matter into the hub bearing 1.

The first sealing member 24 is attached to the stationary outer race 8. On the other hand, the inner race 6 and the second sealing member 26 rotate, and each of the radial lips 24C and 24D slide on the sleeve part 34A of the second sealing member 26.

An annular clearance 36 is provided between the distal end on the inboard side of the cylindrical part 24A of the first sealing member 24 and the outer end edge of the second sealing member 26. Foreign matter may enter through the clearance 36 into a space 42 between the annular part 24B of the first sealing member 24 and the flange part 34B of the second sealing member 26. However, foreign matter that does enter into the space 42 can also be discharged through the clearance 36.

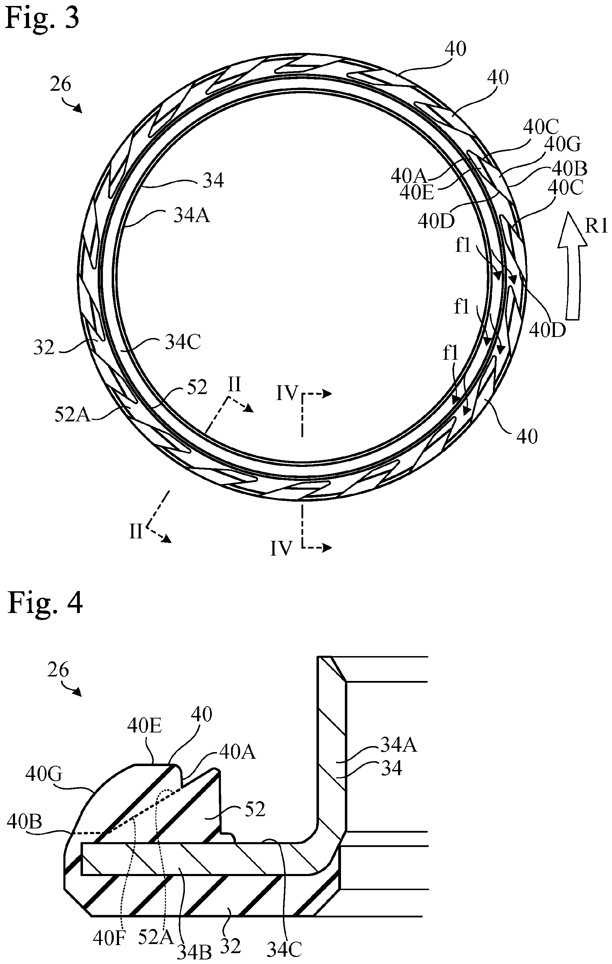

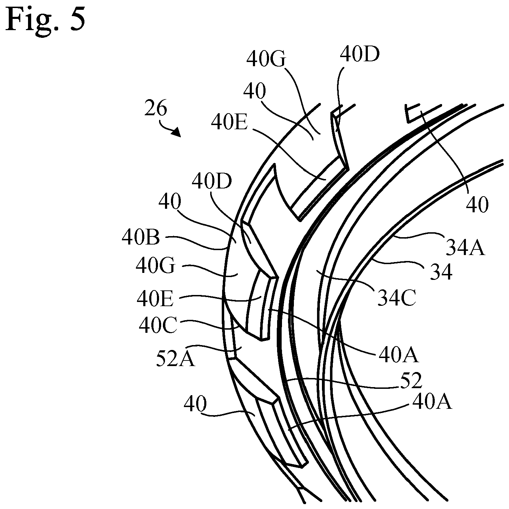

Fig. 3 is a front view of the second sealing member 26, and Fig. 4 is a cross-sectional view taken along line IV-IV in Fig. 3. Fig. 2 is a cross-sectional view of the sealing device 21 taken along line II-II in Fig. 3. Fig. 5 is a perspective view of the second sealing member 26.

As shown in Fig. 2 to Fig. 5, an annular circular protrusion 52 is supported by the second sealing member 26. The circular protrusion 52 protrudes toward the annular part 24B of the first sealing member 24, and viewed in cross section has a substantially triangular shape as shown in Figs. 2 and 4. The circular protrusion 52 has an inclined surface 52A, and the more radially inward a position is of the inclined surface 52A, the more distant the position is from the flange part 34B of the second sealing member 26.

In this embodiment, the circular protrusion 52 is made integral by attachment to a part of the rigid ring 34 that covers the surface 34C of the flange part 34B that faces the annular part 24B. In other words, the circular protrusion 52 comprises a portion of the elastic ring 32. Accordingly, the circular protrusion 52 is formed from the same material as the elastic ring 32, namely, an elastomer material that contains a magnetic metal powder and a ceramic powder, similarly to the water-discharge protrusions 40.

The water-discharge protrusions 40 protrude toward the annular part 24B of the first sealing member 24, and are supported by the second sealing member 26. The water-discharge protrusions 40 are of the same shape and size, and are arranged at equiangular intervals in a circumferential direction. As shown in Fig. 2, the water-discharge protrusions 40 protrude from the inclined surface 52A of the circular protrusion 52 into the space 42 between the annular part 24B of the first sealing member 24 and the flange part 34B of the second sealing member 26.

In this embodiment, the water-discharge protrusions 40 are made integral by being mounted to a portion of the elastic ring 32 that covers a surface 34C of the flange part 34B that faces the annular part 24B. In other words, the water-discharge protrusions 40 comprise portions of the elastic ring 32. Accordingly, the water-discharge protrusions 40 are formed from the same material as that of the elastic ring 32, namely, an elastomer material that contains a magnetic metal powder and a ceramic powder.

In this embodiment, as shown in Fig. 3, the water-discharge protrusions 40 each has a substantially quadrangular outline, specifically a substantially rhombic outline, as viewed in the axial direction of the second sealing member 26. As shown in Fig. 2 and Fig. 4, the water-discharge protrusions 40 each has a substantially rectangular outline, with one corner formed to have an arc shape as viewed in the lateral direction of the second sealing member 26.

More specifically, as shown in Fig. 3, the water-discharge protrusions 40 each has a substantially rhombic outline that is defined by an inner arc surface 40A, an outer arc line 40B, and two inclined side surfaces 40C and 40D. The outer arc line 40B substantially coincides with the outer peripheral contour of the elastic ring 32 that covers the outer peripheral contour of the rigid ring 34 in the second sealing member 26.

As shown in Fig. 2 and Fig. 4, the water-discharge protrusions 40 each has an outline defined by an inner arc surface 40A, a top surface 40E, a curved surface 40G, and a bottom surface 40F. The bottom surface 40F lies on the same plane as the inclined surface 52A of the circular protrusion 52. The top surface 40E is parallel to the surface 34C of the flange part 34B. The curved surface 40G is curved to have an arc shape such that the more radially inward a position is of the curved surface 40G, the more distant the position is from the flange part 34B.

The elastic ring 28 of the first sealing member 24 has a curved surface 50 that extends from the cylindrical part 24A to the annular part 24B. The curved surface 50 has an arc shape such that the more radially inward a position is of the curved surface 50, the more distant the position is from the flange part 34B of the second sealing member 26. The curved surface 40G of the water-discharge protrusions 40 faces the curved surface 50 of the first sealing member 24, and is formed substantially parallel to the curved surface 50. The curved surface 50 defines a narrow space 42 in which the water-discharge protrusions 40 having the curved surface 40G rotate.

In place of the curved surface 40G, the water-discharge protrusions 40 may be provided with an inclined surface such that the more radially inward a position is of the inclined surface, the more distant the position is from the flange part 34B. In this case, the first sealing member 24 may be provided with an inclined surface that is configured to incline away from the flange part 34B, and is substantially parallel to the inclined surfaces of the water-discharge protrusions 40.

In Fig. 3, arrow R1 indicates the rotational direction of the second sealing member 26 (rotational direction of the inner race 6) upon forward movement of the automotive vehicle provided with the hub bearing 1. The inner arc surface 40A and the outer arc line 40B extend in in the rotational direction R1. In other words, each of the inner arc surface 40A and the outer arc line 40B overlaps a circle (not shown) that is concentric with the sleeve part 34A. The inclined side surface 40C intersects with the rotational direction R1 at an acute angle, and the inclined side surface 40D intersects with the rotational direction R1 at an obtuse angle.

As described above, foreign matter (including water and dust) may enter into the space 42 between the annular part 24B of the first sealing member 24 and the elastic ring 32 that covers the flange part 34B of the second sealing member 26 (see Fig. 2). However, the water-discharge protrusions 40 that protrude into the space 42, each has an inclined side surface 40C that intersects at an acute angle with the rotational direction R1 of the inner race 6 (see Fig. 3). As a result, upon rotation of the inner race 6 and the second sealing member 26, the water in the space 42 flows along the inclined side surface 40C, as depicted by arrows f1 in Fig. 3, in an opposing direction to the rotational direction R1 of the inner race 6 and the second sealing member 26, relative to the rotation of the second sealing member 26. Intersection of the inclined side surface 40C at an acute angle with the rotational direction R1 promotes smooth flow and rapid discharge of water from the space 42 through the clearance 36 (see Fig. 2). Consequently, the sealing device 21 has a superior ability to seal and protect the hub bearing 1 from water. Furthermore, deterioration of the sealing device 21, which would otherwise occur in the presence of water (including muddy water or salt water), is greatly reduced. Since the clearance 36 is annular, water flows out of the space 42 through one part the clearance 36, whereas air outside the sealing device 21 flows into the space 42 through another part of the clearance 36. Air flow into the space 42 promotes outflow of water from the space 42. In other words, it is preferable that the water-discharge protrusions 40 protrude into the space 42 that is in communication with the atmosphere. This configuration also reduces a likelihood of a negative pressure occurring in the space 42 with a resultant unexpected deformation of the lips 24C and 24D.

By providing the radial lips 24C and 24D at the first sealing member 24, entry of foreign matter can be reliably prevented. As described above, since the sealing device 21 has a superior ability to rapidly discharge water due to provision of the water-discharge protrusions 40, there is no need to increase a contact pressure of the radial lips 24C and 24D against the sleeve part 34A of the second sealing member 26. As a result, it is possible to suppress or reduce a torque generated by sliding of the radial lips 24C and 24D on the second sealing member 26, and to improve an ability to discharge water.

As described above, since the sealing device 21 has a superior ability to discharge water due to provision of the water-discharge protrusions 40, the first sealing member 24 does not have a portion that is in contact with the flange part 34B of the second sealing member 26, for example, an axial lip to prevent entry of foreign matter. As a result, it is possible to eliminate torque that would otherwise be generated by sliding of the portion of the first sealing member 24 against the second sealing member 26, and thereby improve an energy efficiency of an automotive vehicle.

Furthermore, the water-discharge protrusions 40 are each located distant from the cylindrical part 24A and the annular part 24B of the first sealing member 24. Accordingly, when the inner race 6 rotates, the water-discharge protrusions 40 do not collide with or slide against the first sealing member 24.

In this embodiment, the first sealing member 24 has a curved surface 50, and the water-discharge protrusions 40 each has a curved surface 40G that faces the curved surface 50. Since the first sealing member 24 and the water-discharge protrusions 40 are respectively provided with the curved surface 50 and 40G, there is little likelihood of entry of foreign matter into the space 42 between the annular part 24B and the flange part 34B from the outside. The first sealing member 24 has an annular circular protrusion 52, and the water-discharge protrusions 40 protrude from the inclined surface 52A of the circular protrusion 52. Accordingly, the shape of the space 42 between the annular part 24B and the flange part 34B is relatively complex, which helps prevent entry of foreign matter into the space 42 from the outside.

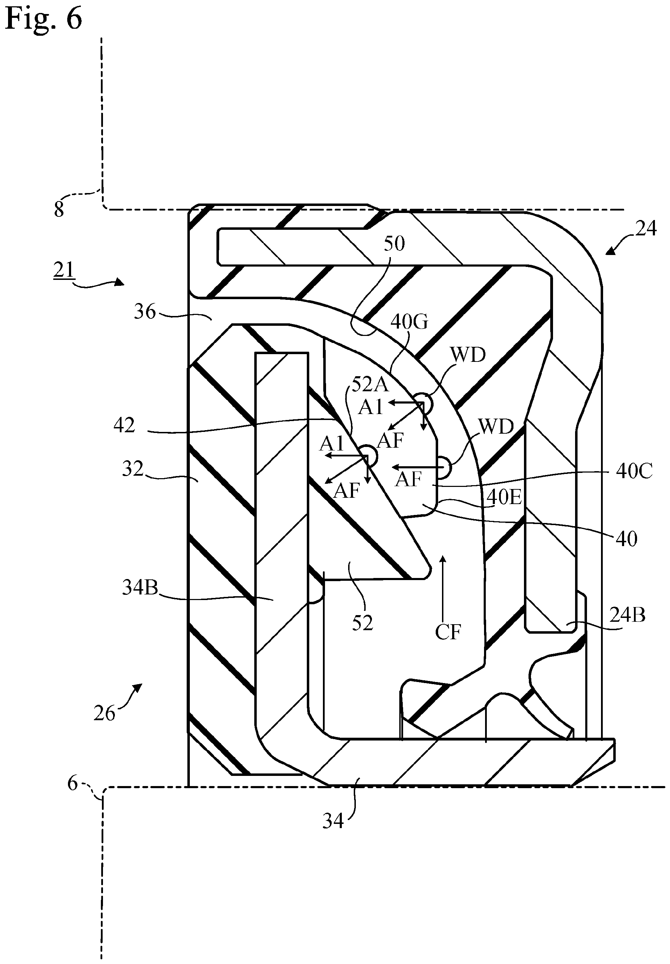

Moreover, the more radially outward a position is of the curved surface 40G, the closer the position is to the flange part 34B. As a result, a superior ability to discharge water is provided. This advantage will now be described with reference to Fig. 6. As shown in Fig. 6, upon rotation of the inner race 6 and the second sealing member 26 a centrifugal force CF acts on air in the space 42. The top surface 40E of each of the water-discharge protrusions 40 is arranged perpendicular to the axial direction of the sealing device 21, and an adhesive force AF acts in an axial direction on water drops WD adhering to the top surface 40E. The adhesive force AF is caused by surface tension or a cohesive force of water and acts in a direction normal to the surface with which the water is in contact, thereby causing the water to adhere to the surface. The water drops WD adhering to the top surface 40E are moved radially outward, for example, toward the curved surface 40G under action of the resultant force of the centrifugal force CF, the adhesive force AF, and the gravitational force. The curved surface 40G is inclined relative to the axial direction of the sealing device 21, and the adhesive force AF acts on the water drops WD adhering to the curved surface 40G in a direction normal to the curved surface 40G. The water drops WD adhering to the curved surface 40G are moved radially outward, namely, toward the annular clearance 36 under action of the resultant force of the centrifugal force CF, the adhesive force AF, and the gravitational force. In particular, the water drops WD adhering to the curved surface 40G are moved toward the clearance 36 by the axial direction component A1 of the adhesive force AF. In this way, the curved surface 40G promotes water discharge. This effect can also be achieved by providing the water-discharge protrusions 40 with an inclined surface, instead of the curved surface 40G, with the inclined surface being inclined such that the more radially inward a position is of the inclined surface, the more distant the position is from the flange part 34B.

Similarly, the more radially outward a position is of the inclined surface 52A of the circular protrusion 52, the closer the position is to the flange part 34B. Accordingly, a superior ability to discharge water is provided. The inclined surface 52A of the circular protrusion 52 is inclined with respect to the axial direction of the sealing device 21, and an adhesive force AF is exerted on water drops WD adhering to the inclined surface 52A along the normal direction of the inclined surface 52A. The water drops WD adhering to the inclined surface 52A are moved radially outward, i.e., toward the annular clearance 36 under action of the resultant force of the centrifugal force CF, the adhesive force AF, and the gravitational force. In particular, the water drops WD adhering to the inclined surface 52A are moved toward the clearance 36 by the axial direction component A1 of the adhesion force AF. In this way, the inclined surface 52A promotes water discharge.

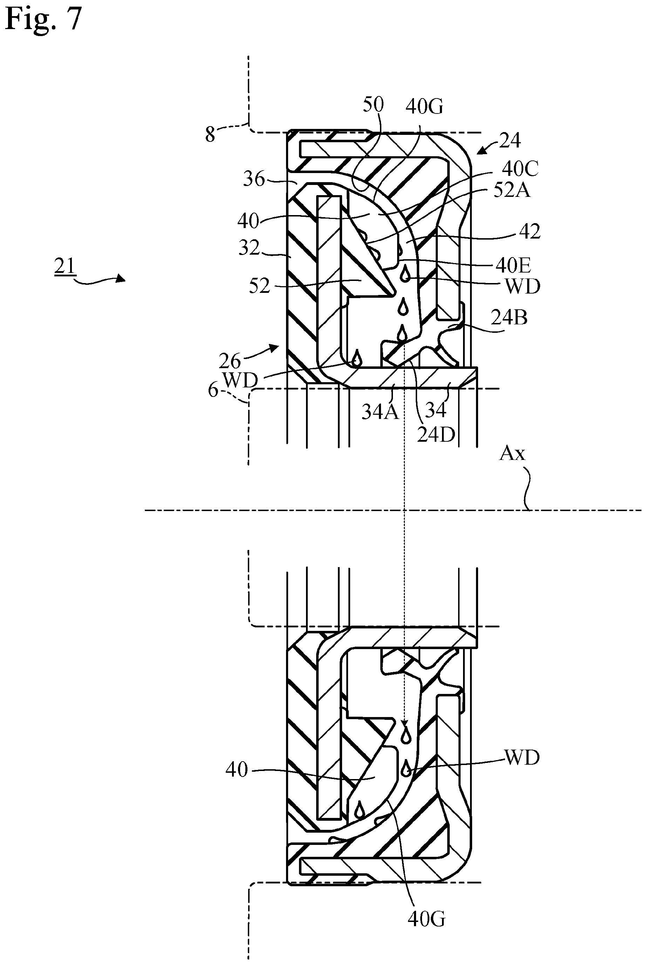

Furthermore, the more radially outward a position is of the curved surface 50 of the first sealing member 24, the closer the position is to the flange part 34B. Accordingly, a superior ability to discharge water is provided. This advantage will now be described with reference to Fig. 7. As shown in Fig. 7, the water drops WD remain in the space 42 after stop of the rotation of the inner race 6 and the second sealing member 26. Above the central axis Ax of the sealing device 21, water drops WD fall under the gravitational force on the sleeve part 34A of the rigid ring 34 or the outer peripheral surface of the radial lip 24D through the curved surfaces 40G of the water-discharge protrusions 40. Further, below the central axis Ax of the sealing device 21, as indicated by the broken-line arrow in the drawing, the water drops WD fall under the gravitational force onto the curved surface 50 of the first sealing member 24 through the outer peripheral surface of the sleeve part 34A or radial lip 24D. The more radially outward a position is of the curved surface 50, the closer the position is to the flange part 34B. As a result, the water drops WD are able to be rapidly discharged from the annular clearance 36. This effect can also be achieved by providing the first sealing member 24 with an inclined surface, instead of the curved surface 50, the inclined surface being inclined such that the more radially inward a position is of the inclined surface, the more distant the position is from the flange part 34B.

In this embodiment, as shown in Fig. 3, a length of each of the water-discharge protrusions 40 in the rotational direction of the inner race 6 is greater than a length of each of the water-discharge protrusions 40 in radial directions of the first sealing member 24 and the second sealing member 26. In particular, the water-discharge protrusions 40 each has a maximum length (the length between the apex formed by the inner arc surface 40A and the inclined side surface 40C and the apex formed by the outer arc line 40B and the inclined side surface 40D) along the rotational direction R1 of the second sealing member 26 (rotational direction of the inner race 6). Accordingly, even if hard foreign matter collides with and damages the water-discharge protrusions 40, or if the water-discharge protrusions 40 are subject to wear by water flow, the entirety of the water-discharge protrusions 40 does not deteriorate in a short period of time. Consequently, the water-discharge protrusions 40 have a long service life.

In this embodiment, the water-discharge protrusions 40 protrude into the space 42 between the annular part 24B of the first sealing member 24 and the flange part 34B of the second sealing member 26. As will be apparent from Fig. 2, the water-discharge protrusions 40 are arranged in a range that is within a maximum diameter of the first sealing member 24. As a result of this arrangement, there is no need to increase a size of the sealing device 21 or the hub bearing 1.

In this embodiment, the water-discharge protrusions 40 are formed from the same material as that of the elastic ring 32, namely, an elastomer material containing a magnetic metal powder and a ceramic powder. Since the water-discharge protrusions 40 contain the metal powder and the ceramic powder, they have superior durability against impact of hard foreign matter and a superior wear resistance.

In this embodiment, the water-discharge protrusions 40 are mounted to be integral with the elastic ring 32 that covers the flange part 34B of the rigid ring 34 of the second sealing member 26. Since the number of parts used is thereby reduced, assembly of the sealing device 21 is simplified.

A method used for forming the water-discharge protrusions 40 may be, for example, mold pressing or injection molding. By use of such a method, the water-discharge protrusions 40 can be formed simultaneously with the elastic ring 32. Alternatively, the water-discharge protrusions 40 may be joined to the flange part 34B by bonding with an adhesive, or may be formed by making cuts in the elastic ring 32.

### SECOND EMBODIMENT

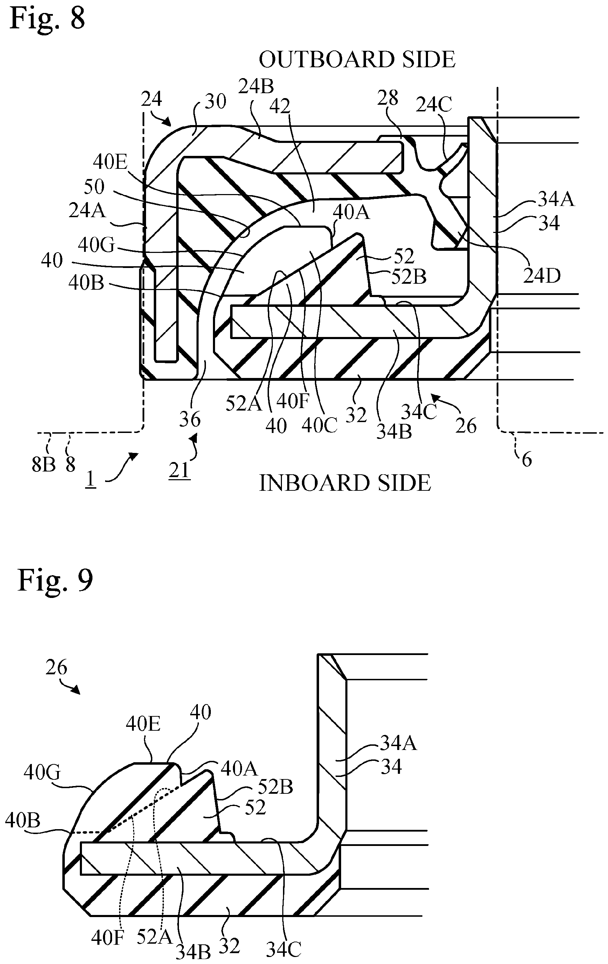

Fig. 8 is a cross-sectional view showing a second sealing member 26 of a sealing device 21 according to a second embodiment of the present invention. In Fig. 8 and subsequent drawings, the same reference symbols are used to identify components already described, and detailed description of such components is omitted. The sealing device 21 according to the second embodiment has a first sealing member 24, which is the same as that in the first embodiment, and a second sealing member 26, which differs in detail from that in the first embodiment.

In this embodiment, the front view of the second sealing member 26 is similar to that in Fig. 3, and illustration thereof is omitted. Fig. 9 corresponds to a cross-sectional view taken along line IV-IV in Fig. 3. Fig. 8 correspond to a cross-sectional view of the sealing device 21 taken along line II-II in Fig. 3.

In this embodiment, the circular protrusion 52 supported by the second sealing member 26 includes an inner inclined surface 52B disposed radially inside the inclined surface 52A of the circular protrusion 52. The inner inclined surface 52B is inclined such that the more radially inward a position is of the inner inclined surface 52B, the closer the position is to the flange part 34B of the second sealing member 26.

The second embodiment achieves the same effect as that of the first embodiment. For example, as in the first embodiment described above with reference to Fig. 6, the effect of discharging water upon rotation of the second sealing member 26 is also achieved in the second embodiment. According to the second embodiment, the inner inclined surface 52B is formed radially inside the inclined surface 52A of the circular protrusion 52. The inner inclined surface 52B is inclined such that the more radially inward a position is of the inner inclined surface 52B, the closer the position is to the flange part 34B of the second sealing member 26, thereby enabling water drops to readily flow out of the space 42 upon rotation of the rotatable member.

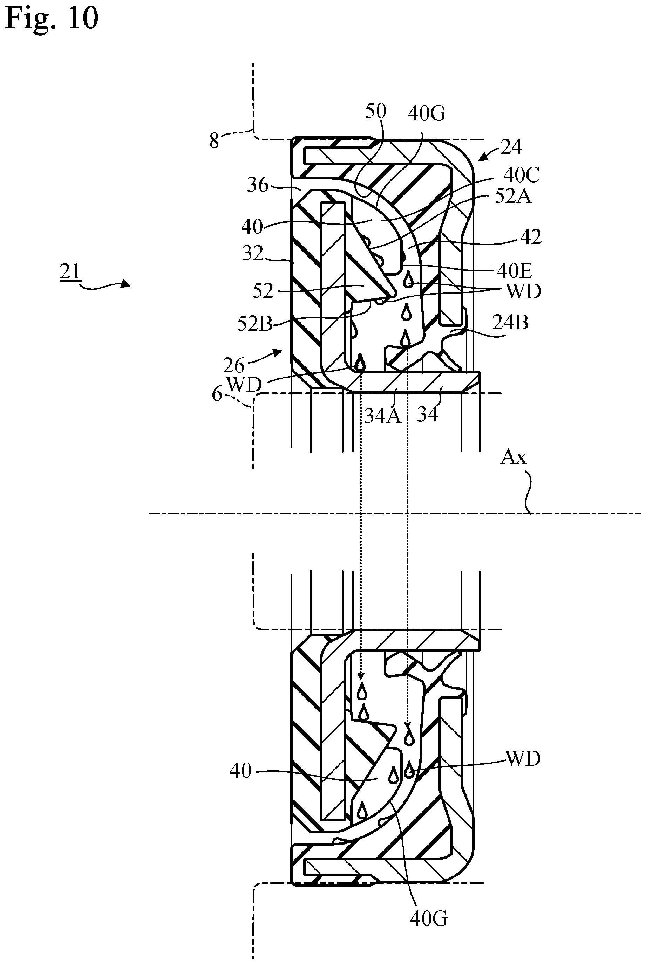

The effect described in the first embodiment above with reference to Fig. 7 of discharging water upon stop of the rotation of the second sealing member 26 is also achieved in the second embodiment. According to the second embodiment, water drops are able to readily flow out of the space 42 upon stop of rotation of the rotating member. Fig. 10, which is similar to Fig. 7, shows advantages of the sealing device according to the second embodiment upon stop of rotation of the second sealing member. As shown in Fig. 10, above the central axis Ax of the sealing device 21, water drops WD flow down through the inner inclined surface 52B and readily separate from the circular protrusion 52. Below the central axis Ax of the sealing device 21, a considerable amount of water drops WD fall on the inner inclined surface 52B of the circular protrusion 52, flow down through the inner inclined surface 52B, and fall on the curved surface 50 of the first sealing member 24.

### THIRD EMBODIMENT

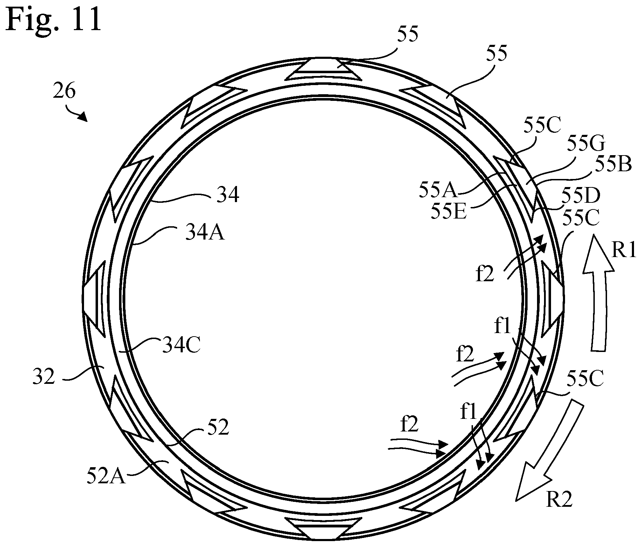

Fig. 11 is a front view showing a second sealing member 26 of a sealing device 21 according to a third embodiment of the present invention. The third embodiment is a modification of the first embodiment; the second embodiment may be similarly modified.

In the third embodiment, each of water-discharge protrusions 55 provided on the flange part 34B of the second sealing member 26 has a substantially trapezoidal outline as viewed along the axial direction of the second sealing member 26. More specifically, the water-discharge protrusions 55 each has a substantially trapezoidal outline defined by an inner arc surface 55A, an outer arc line 55B, and two inclined side surfaces 55C and 55D. The lengths of the two inclined side surfaces 55C and 55D are equal. However, the outer arc line 55B may be omitted, and the outline of each of the water-discharge protrusions 55 may be an isosceles triangle. The top surface 55E, the curved surface 55G, and the bottom surface (not shown) of the water-discharge protrusions 55 may be the same as the top surface 40E, the curved surface 40G, and the bottom surface 40F of the first embodiment (see Figs. 2 and 4).

In this embodiment, each of the water-discharge protrusions 55 has two inclined side surfaces 55C and 55D that intersect at acute angles with the two rotational directions R1 and R2 of the inner race 6 and the second sealing member 26. In Fig. 11, arrow R1 indicates the rotational direction of the second sealing member 26 (rotational direction of the inner race 6) upon forward movement of the automotive vehicle provided with the hub bearing 1. Arrow R2 indicates the rotational direction of the second sealing member 26 (rotational direction of the inner race 6) upon rearward movement of the automotive vehicle provided with the hub bearing 1. The inner arc surface 55A and the outer arc line 55B extend in arc shapes along the rotational directions R1 and R2. In other words, each of the inner arc surface 55A and the outer arc line 55B overlaps a circle (not shown) that is concentric with the sleeve part 34A. The inclined side surface 55C intersects with the rotational direction R1 at an acute angle, and intersects with the rotational direction R2 at an obtuse angle. The inclined side surface 55D intersects with the rotational direction R1 at an obtuse angle, and intersects with the rotational direction R2 at an acute angle.

Upon rotation of the inner race 6 and the second sealing member 26 in the rotational direction R1, the water in the space 42 (see Figs. 2 and 4) flows along the inclined side surface 55C, as depicted by arrows f1 in Fig. 11, in an opposing direction to the rotational direction R1 of the inner race 6 and the second sealing member 26, relative to the rotation of the second sealing member 26. Intersection of the inclined side surface 55C at an acute angle with the rotational direction R1 promotes smooth flow of water. On the other hand, upon rotation of the inner race 6 and the second sealing member 26 in the rotational direction R2, the water in the space 42 flows along the inclined side surface 55D, as depicted by arrows f2 in Fig. 11, in an opposing direction to the rotational direction R2 of the inner race 6 and the second sealing member 26, relative to the rotation of the second sealing member 26. Intersection of the inclined side surface 55D at an acute angle with the rotational direction R2 promotes a smooth flow of water. Water that flows in this way is rapidly discharged from the space 42 through the clearance 36 (see Fig. 2). Accordingly, the sealing device 21 has a superior ability to seal and protect the hub bearing 1 from water. Furthermore, deterioration of the sealing device 21, which would otherwise occur in the presence of water (including muddy water or salt water), is greatly reduced.

The sealing device 21 according to this modification can be used for both left and right wheels of an automotive vehicle; and due to the provision of water-discharge protrusions 50 is able to discharge water upon either forward or rearward movement of the automotive vehicle. When mounting the sealing device 21 to the automotive vehicle, a mechanic is not required to exercise particular care in selecting a wheel for mounting the sealing device.

A length of each of the water-discharge protrusions 55 in the rotational directions R1 and R2 (that is, the length of the inner arc surface 55A) is greater than a length each of the water-discharge protrusions 55 in radial directions of the sealing device 21 (namely, the distance between the arc surfaces 55A and 55B). Therefore, even if hard foreign matter collides with and damages the water-discharge protrusions 55, or the water-discharge protrusions 55 are worn by water flow, the entirety of the water-discharge protrusions 55 does not deteriorate in a short period of time. Consequently, the water-discharge protrusions 55 have a long service life.

### FOURTH EMBODIMENT

The first to third embodiments described above relate to the sealing device 21 on the inboard side of the hub bearing 1. Afourth embodiment of the present invention relates to a sealing structure that includes the sealing device 20 on the outboard side of the hub bearing 1.

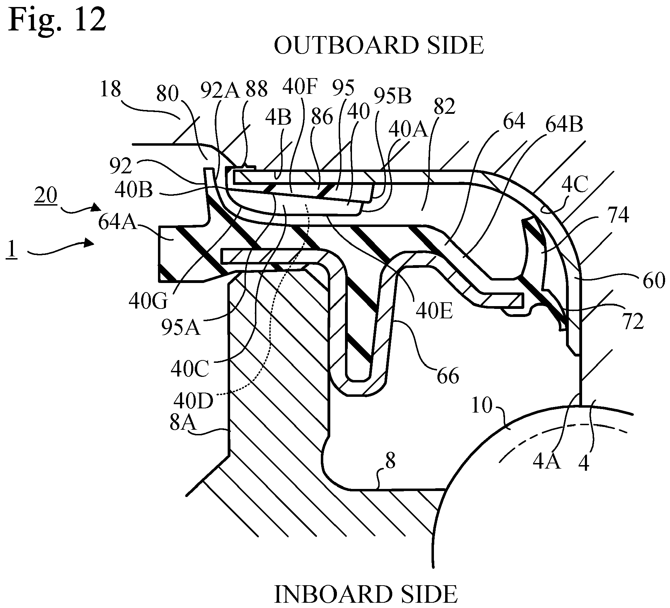

As shown in Fig. 12, the sealing device (sealing member) 20 is located in a gap between the end portion 8A on the outboard side of the outer race 8 of the hub bearing 1 and the hub 4 of the hub bearing 1. The hub 4 has an outer peripheral surface 4A of a cylindrical part in the vicinity of the balls 10, a flange surface 4B that extends radially outward from the outer peripheral surface 4A of the hub 4, and an arc surface 4C that connects the outer peripheral surface 4A and the flange surface 4B. The flange surface 4B is a surface on the inboard side of the outboard side flange 18.

A rotational sealing member 60, which rotates with the hub 4, is fixed to the periphery of the hub 4, although the sealing member 60 is not absolutely necessary. The rotational sealing member 60 is made of a rigid material such as a metal. The sealing device 20 and the rotational sealing member 60 each have an annular shape. In Fig. 12, only the left parts of the sealing device and the sealing member are shown.

The sealing device 20 has a composite structure and includes an elastic ring 64 and a rigid ring 66. The elastic ring 64 is made of an elastic material such as an elastomer. The rigid ring 66 is made of a rigid material, for example, a metal, and reinforces the elastic ring 64.

A part of the rigid ring 66 is embedded in the elastic ring 64 and is in close contact with the elastic ring 64. A part of the rigid ring 66 having a U-shaped cross section is engaged by interference fit, namely, is press-fitted into the inner peripheral surface of the end portion 8 of the outer race 8A.

The elastic ring 64 has an annular part 64A, an inclined connecting part 64B, and lips 72 and 74. The annular part 64A, which has a circular annular shape, is in contact with the end surface of the end portion 8A of the outer race 8, and extends radially inward toward the outer peripheral surface 4A of the cylindrical part of the hub 4 so as to be orthogonal to the central axis Ax of the hub bearing 1. The annular part 64A faces the flange surface 4B of the outboard side flange 18.

The inclined connecting part 64B is located radially inside the annular part 64A. In this embodiment, the inclined connecting part 64B extends obliquely from the annular part 64A radially inward and toward the inboard side, is bent orthogonal to the central axis Ax of the hub bearing 1, and extends further inwardly in radial directions.

The lips 72 and 74 extend from the inclined connecting part 64B toward the hub 4 of the hub bearing 1. Each of the lips 72 and 74 is made of an elastic material only, and is an annular ring composed by a thin plate that extends from the inclined connecting part 64B. The distal end of each of the lips 72 and 74 is brought into contact with the rotational sealing member 60. The sealing device 20 is attached to the stationary outer race 8, but since the hub 4 rotates the lips 72 and 74 slide on the rotational sealing member 60 fixed to the hub 4.

The lip 72 is a radial lip, that is, a grease lip, and extends from the innermost edge of the inclined connecting part 64B toward the cylindrical part of the hub 4 near the balls 10. The distal end of the radial lip 72 is to be in contact with a portion of the rotational sealing member 60 that covers the outer peripheral surface 4A of the cylindrical part. The radial lip 72 extends radially inward and toward the inboard side, and has a primary role in preventing outflow of the lubricant from the inside of the hub bearing 1.

The lip 74 extends laterally from the inclined connecting part 64B. The lip 74 is an axial lip, that is, a side lip, and extends toward the arc surface 4C of the hub 4. The distal end of the axial lip 74 is in contact with a part of the rotational sealing member 60 that covers the arc surface 4C of the hub 4. The lip 74 is a dust lip and has a primary role in preventing exterior inflow of foreign matter into the hub bearing 1.

In this embodiment, an annular clearance 80 is provided between the end portion 8A of the outer race 8 and the flange surface 4B of the hub 4. Foreign matter may enter into a space 82 through the clearance 80 between the annular part 64A of the sealing device 20 and the flange surface 4B of the second sealing member 26 (in this embodiment, the space between the annular part 64A and the rotational sealing member 60). However, foreign matter that does enter into the space 82 can also be discharged through the clearance 80.

In this embodiment, an annular circular protrusion 95 and water-discharge protrusions 40 protruding toward the annular part 64A of the sealing device 20 are supported on the outboard side flange 18 of the hub 4. As viewed in cross section, the circular protrusion 95 is substantially triangular in shape. The circular protrusion 95 has an inclined surface 95A, such that the more radially inward a position of the inclined surface 95A, the more distant the position is from the flange surface 4B flange part 34B of the hub 4. The circular protrusion 95 includes an inner inclined surface 95B disposed radially inside the inclined surface 95A of the circular protrusion 95. The inner inclined surface 95B is inclined such that the more radially inward a position of the inner inclined surface 95B, the closer the position is to the flange surface 4B of the hub 4.

The water-discharge protrusions 40 are of the same shape and size, and are arranged at equiangular intervals in the circumferential direction. The water-discharge protrusions 40 protrude into the space 82.

In this embodiment, the circular protrusion 95 and the water-discharge protrusions 40 are mounted to be integral with an elastic ring 86 that is attached to the outboard side flange 18. The circular protrusion 95, the water-discharge protrusions 40, and the elastic ring 86 are each made of an elastic material, for example, an elastomer material. The circular protrusion 95, the water-discharge protrusions 40, and the elastic ring 86 may be formed from a resin material, an elastomer material, a resin material containing at least one of a metal powder and a ceramic powder, or an elastomer material containing at least one of a metal powder and a ceramic powder. In a case in which the circular protrusion 95, the water-discharge protrusions 40, and the elastic ring 86 contain at least one of the metal powder and the ceramic powder, the circular protrusion 95, the water-discharge protrusions 40, and the elastic ring 86 have superior durability against the impact of hard foreign matter and a superior wear resistance.

The elastic ring 86 covers the outer edge of the rotational sealing member 60 and further covers a part of the surface of the rotational sealing member 60 on the side of the flange surface 4B. An annular seal protrusion 88 is formed on this part of the elastic ring 86. The annular seal protrusion 88 is sandwiched between the rotational sealing member 60 and the flange surface 4B, and prevents or reduces contact of water with the flange surface 4B, thereby suppressing rusting of the hub 4.

The water-discharge protrusions 40 of this embodiment may be the same as the water-discharge protrusions 40 or 55 of the first to third embodiments. For ease of understanding, reference numerals used to denote the water-discharge protrusions 40 of the first embodiment are used in Fig. 12. The bottom surface 40F of each of the water-discharge protrusions 40 lies on the same plane as the surface of the elastic ring 86, whereas the top surface 40E is parallel to the flange surface 4B. The curved surface 40G is curved in an arc shape such that the more radially inward a position is on the curved surface 65G, the more distant the position is from the flange surface 4B.

The sealing device 20 has an annular outer labyrinth lip 92. The outer labyrinth lip 92 protrudes from the annular part 64A of the elastic ring 64 toward the outboard side flange 18 of the hub 4, but is not in contact with either the hub 4 or the rotational sealing member 60. The outer labyrinth lip 92 overlaps the water-discharge protrusions 40 in radial directions, and is disposed radially outside the water-discharge protrusions 40.

The outer labyrinth lip 92 has a curved surface 92A such that the more radially inward the position is of the outer labyrinth lip 192, the more distant the position is from the flange surface 4B. The curved surface 40G of each of the water-discharge protrusions 40 faces the curved surface 92 of the outer labyrinth lip 92A, and is formed substantially parallel to the curved surface 92A. The curved surface 92A defines a narrow space 82 in which the water-discharge protrusions 40 having the curved surface 40G rotate. Instead of the curved surface 40G each of the water-discharge protrusions 40 may be provided with an inclined surface that is inclined such that the more radially inward a position of the inclined surface, the more distant the position is from the flange surface 4B. In this case, the outer labyrinth lip 92 may have an inclined surface such that the more radially inward a position is of the inclined surface of the outer labyrinth lip 192, the more distant the position is from the flange surface 4B; the inclined surface of the outer labyrinth lip 192 is substantially parallel to the inclined surface of each of the water-discharge protrusions 40.

Hereinafter, Fig. 3, which was referred to in relation to the first embodiment, is again referred to. In Fig. 3, the second sealing member 26 can be viewed as the rotational sealing member 60. Arrow R1 can be considered as the rotational direction of the hub 4 upon forward movement of the automotive vehicle provided with the hub bearing 1. The inclined side surface 40C intersects with the rotational direction R1 of the hub 4 at an acute angle, whereas the inclined side surface 40D intersects with the rotational direction R1 at an obtuse angle.

As described above, foreign matter (including water and dust) may enter into the space 82 between the annular part 64A of the sealing device 20 and the outboard side flange 18 of the hub 4. However, the water-discharge protrusions 40 protrude into the space 82, and each of the water-discharge protrusions 40 has an inclined side surface 40C that intersects at an acute angle with the rotational direction R1 of the hub 4 (see Fig. 3). Accordingly, as the hub 4 rotates, water in the space 82 flows along the inclined side surface 40C in a direction opposite to the rotational direction R1 of the hub 4 relative to the rotation of the hub 4. Intersection of the inclined side surface 40C with the rotational direction R1 at an acute angle promotes smooth flow of water. Water that flows in this way is rapidly discharged from the space 82 through the clearance 80 (see Fig. 12). Accordingly, the sealing structure has a superior ability to seal and protect the hub bearing 1 from water. Furthermore, deterioration of the sealing device 20, that would otherwise occur in the presence of water (including muddy water or salt water), is greatly reduced. Since the clearance 80 is annular, water flows out of the space 82 through one part of the clearance 80, whereas air from outside the sealing device 20 flows into the space 82 through another part of the clearance 80. Air flow into the space 82 promotes outflow of water from the space 82. In other words, it is preferable that the water-discharge protrusions 40 protrude into the space 82 that is in communication with the atmosphere. This configuration also reduces a likelihood of a negative pressure occurring in the space 82 with a resultant unexpected deformation of the lips 74 and 76.

Due to provision of the water-discharge protrusions 40, the sealing structure has a superior ability to discharge water, and thus there is no need increase a number of dust lips 74 to prevent entry of foreign matter, and there is also no need to increase a contact pressure of the lips 72 and 74 against the rotational sealing member 60. As a result, it is possible to suppress or reduce a torque generated by sliding of the lips 72 and 74 on the rotational sealing member 60, while improving an ability to discharge water.

Furthermore, the water-discharge protrusions 40 are each located distant from the annular part 64A of the sealing device 20. Accordingly, when the hub 4 rotates, the water-discharge protrusions 40 do not collide with or slide against the sealing device 20.

In this embodiment, the outer labyrinth discharge 92 has a curved surface 92A, and the water-discharge protrusions 40 each has a curved surface 40G facing the curved surface 92A. Since the outer labyrinth lip 92 and the water-discharge protrusions 40 are respectively provided with the curved surface 92A and 40G, there is little likelihood of entry of foreign matter into the space 82 from the outside.

Moreover, the more radially outward a position is of the curved surface 40G of the water-discharge protrusions 40, the closer the position is to the flange surface 4B. Accordingly, an ability to discharge water is high. Similarly, the more radially outward a position is of the inclined surface 95A of the circular protrusion 95, the closer the position is to the flange surface 4B. Accordingly, an ability to discharge water is also high. This effect is obtained for the same reasons as those described in the first embodiment with reference to Fig. 6. The more radially inward a position is of the inner inclined surface 95B, the closer the position is to the flange surface 4B. Accordingly, water drops are able to readily flow out of the space 42 upon rotation of the rotating member.

Furthermore, the more radially outward a position is of the curved surface 92A of the outer labyrinth lip 92, the closer the position is to the flange surface 4B. Accordingly, the ability to discharge water is high. This effect is obtained for the same reasons as those described in the first embodiment with regard to the curved surface 50 with reference to Fig. 7.

The more radially outward a position is of the inclined surface 95A of the circular protrusion 95, the closer the position is to the flange surface 4B. Accordingly, water drops are able to easily flow out of the space 42 upon stop of rotation of the rotating member. This effect is obtained by the same reasons as those described in the second embodiment with regard to the inner inclined surface 52B with reference to Fig. 10.

In this embodiment, as will be apparent from Fig. 3, a length of each of the water-discharge protrusions 40 in the direction of rotation of the hub 4 is greater than that of each of the water-discharge protrusions 40 in radial directions of the sealing device 20. In particular, the water-discharge protrusions 40 each has a maximum length (the length between the apex formed by the inner arc surface 40A and the inclined side surface 40C and the apex formed by the outer arc line 40B and the inclined side surface 40D) along the rotational direction R1 of the hub 4. Accordingly, even if hard foreign matter collides with and damages the water-discharge protrusions 40, or the water-discharge protrusions 40 are worn by the water flow, the entirety of the water-discharge protrusions 40 does not deteriorate in a short period of time. Consequently, the water-discharge protrusions 40 have a long service life.

In this embodiment, the water-discharge protrusions 40 protrude into the space 82 between the annular part 64A of the sealing device 20 and the outboard side flange 18 of the hub 4. As will be apparent from Fig. 12, the water-discharge protrusions 40 are arranged in a range that is within a maximum diameter of the sealing device 20. As a result of this arrangement, there is no need to increase a size of the sealing structure or the hub bearing 1.

Features included in the third embodiment (Fig. 11) may optionally be incorporated into the fourth embodiment. In other words, instead of the water-discharge protrusions 40, water-discharge protrusions 55 suitable for rotation of the hub 4 in both a forward and rearward direction may be supported by the outboard side flange 18.

In the fourth embodiment, the rotational sealing member 60 is fixed around the hub 4. However, the rotational sealing member 60 may be omitted so that the lips 72 and 74 are in contact with the hub 4. In this case, the water-discharge protrusions 40 may be directly mounted to be integral with the outboard side flange 18 of the sealing device 20. In this case, the water-discharge protrusions 40 may be formed of the same rigid material as that used for the outboard side flange 18, for example, a metal.

### OTHER MODIFICATIONS

Various embodiments of the present invention have been described above. However, the foregoing description is not intended to limit the present invention, and various modifications including omission, addition, and substitution of structural elements may be made in so far as such modifications remain within the scope of the present invention.

In the above-described embodiments, the hub 4 and the inner race 6, which are inner members, are rotatable members, while the outer race 8, which is an outer member, is a stationary member. However, the present invention is not limited thereto, and may be configured such that multiple sealed members rotate relative to each other. For example, inner members may be stationary while an outer member may be rotatable, or all of the members may be rotatable.

The present invention is not limited to sealing the hub bearing 1. For example, the sealing device or the sealing structure according to the present invention may be applied to a differential gear mechanism or other power transmission mechanism of an automotive vehicle, to a bearing or other support mechanism for a drive shaft of an automotive vehicle, or to a bearing or other support mechanism of a rotary shaft of a pump.

Although the rigid ring 30 of the sealing device 21 in the first to third embodiments consists of a single component, in place of the rigid ring 30, there may be employed multiple rigid rings that are provided radially apart from each other. The rigid ring 66 of the sealing device 20 of the fourth embodiment also consists of a single component. However, in place of the rigid ring 66, there may be employed multiple rigid rings that are provided radially apart from each other.

Aspects of the present invention are also set out in the following clauses.

### Clause 1

A sealing device disposed between an inner member and an outer member that rotate relative to each other, and that acts to seal a gap between the inner member and the outer member, the sealing device including:
a first sealing member to be mounted to the outer member, the first sealing member including an annular part that extends radially inward toward the inner member; and
a second sealing member to be mounted to the inner member, the second sealing member including a flange part that extends radially outward and faces the annular part of the first sealing member,
an annular circular protrusion being supported by the second sealing member and protruding toward the annular part of the first sealing member, the circular protrusion including an inclined surface, such that a more radially inward a position is of the inclined surface, a more distant the position is from the flange part of the second sealing member,
multiple water-discharge protrusions protruding from the inclined surface of the circular protrusion into a space between the annular part of the first sealing member and the flange part of the second sealing member and being arranged in a circumferential direction,
each of the water-discharge protrusions including an inclined side surface that intersects at an acute angle with a rotational direction in which at least one of the inner member and the outer member rotates.

### Clause 2

The sealing device according to Clause 1, wherein the second sealing member further includes a cylindrical sleeve part that surrounds the inner member, and wherein the first sealing member includes two radial lips formed from an elastic material and that extend toward the sleeve part of the second sealing member.

According to this clause, the radial lips serve to reliably enhance prevention of intrusion of foreign matter. In this case, because of superior ability to discharge water by the water-discharge protrusions, there is no need to increase a contact pressure of the radial lips against the sleeve part of the second sealing member. As a result, it is possible to suppress or reduce any torque generated by sliding of the radial lips on the second sealing member, while improving an ability to discharge water.

### Clause 3

The sealing device according to Clause 1 or Clause 2, wherein the first sealing member does not have a portion, e.g., an axial lip in contact with the flange part of the second sealing member.

According to this clause, it is possible to eliminate a torque that would otherwise be generated by sliding of the portion of the first sealing member on the second sealing member.

### Clause 4

The sealing device according to any one of Clauses 1 to 3, wherein the first sealing member includes a curved surface or an inclined surface, such that the more radially inward a position is of the curved surface or the inclined surface, the more distant the position is from the flange part of the second sealing member,
each of the water-discharge protrusions including a curved surface or an inclined surface, such that the more radially inward a position is of the curved surface or the inclined surface, the more distant the position is from the flange part of the second sealing member, the curved surface or the inclined surface of the water-discharge protrusions facing the curved surface or the inclined surface of the first sealing member.

According to this clause, since each of the first sealing member and the water-discharge protrusions include either the curved surface or the inclined surface, there is little likelihood of entry of foreign matter into the space between the annular part and the flange part from the outside. Moreover, the more radially outward a position is of the curved surface or the inclined surface of the water-discharge protrusions, the closer the position is to the flange part. Accordingly, an ability to discharge water is high.

### Clause 5

The sealing device according to any one of Clauses 1 to 4, wherein the circular protrusion includes an inner inclined surface disposed radially inside the inclined surface of the circular protrusion.

According to this clause, water drops are able to readily flow out of the space both upon start of rotation of the rotating member and upon stop of rotation of the rotating member.

### Clause 6

The sealing device according to any one of Clauses 1 to 5,wherein each of the water-discharge protrusions includes two inclined side surfaces that intersect at an acute angle with two rotational directions in which at least one of the inner member and the outer member respectively rotates.

According to this clause, since the two inclined side surfaces intersect at an acute angle with the two rotational directions, each of the inclined side surfaces promotes smooth flow of water in either of the rotational directions. Thus, the sealing device can be used in either of the rotational directions.

### Clause 7

The sealing device according to any one of Clauses 1 to 6, wherein a length of each of the water-discharge protrusions in the rotational direction is greater than a length of each of the water-discharge protrusions in radial directions of the first sealing member and the second sealing member.

According to this clause, even if hard foreign matter collides with and damages the water-discharge protrusions, or the water-discharge protrusions are worn by water flow, the entirety of the water-discharge protrusions does not deteriorate in a short period of time. Consequently, the water-discharge protrusions have a long service life.

### Clause 8

The sealing device according to any one of Clauses 1 to 7, wherein the space into which the water-discharge protrusions protrude communicates with the atmosphere.

According to this clause, air flow into the space promotes outflow of water from the space.

### Clause 9

The sealing device according to any one of Clauses 1 to 8, wherein the water-discharge protrusions are formed from a resin material, an elastomer material, a resin material containing at least one of a metal powder and a ceramic powder, an elastomer material containing at least one of a metal powder and a ceramic powder, or a metal.

In a case in which the water-discharge protrusions contain at least one of a metal powder and a ceramic powder, or are formed from a metal, the water-discharge protrusions have superior durability against impact of hard foreign matter and a superior wear resistance.

### Clause 10

A sealing structure including:
an inner member that includes a cylindrical part and a flange that extends radially outward from the cylindrical part;
an outer member that rotates relative to the inner member; and
a sealing member that is mounted to the outer member, the sealing member including an annular part that extends radially inward toward the cylindrical part of the inner member and faces the flange of the inner member,
an annular circular protrusion being supported by the inner member and protruding toward the annular part of the sealing member, the circular protrusion including an inclined surface, such that a more radially inward a position is of the inclined surface, a more distant the position is from the flange of the inner member,
multiple water-discharge protrusions protruding from the inclined surface of the circular protrusion into a space between the annular part of the sealing member and the flange of the inner member and being arranged in a circumferential direction,
each of the water-discharge protrusions including an inclined side surface that intersects at an acute angle with a rotational direction in which at least one of the inner member and the outer member rotates.

In this sealing structure, water may enter a space between the annular part of the sealing member and the flange of the inner member. However, the water-discharge protrusions protrude into the space, and each of the water-discharge protrusions includes an inclined side surface that intersects at an acute angle with a rotational direction in which at least one of the inner member and the outer member rotates. Thus, together with relative rotation of the inner member and the outer member, the water in the space flows in an opposing direction along the inclined side surface and is rapidly discharged from the space. As a result, the sealing structure has a superior ability to protect the sealed object from water. Furthermore, since the water-discharge protrusions protrude into the space between the annular part of the sealing member and the flange of the inner member, there is no need to enlarge the sealing structure to accommodate the water-discharge protrusions. Since the water-discharge protrusions protrude from the inclined surface of the circular protrusion supported by the inner member, there is little likelihood of entry of foreign matter into the space between the annular part and the flange from the outside. Moreover, the more radially outward the position is of the inclined surface of the circular protrusion, the closer the position is to the flange. Accordingly, an ability to discharge water is high.

### Clause 11

The sealing structure according to Clause 10, wherein the sealing member includes an annular outer labyrinth lip that protrudes from the annular part toward the flange of the inner member and is not in contact with the inner member, the outer labyrinth lip overlapping the water-discharge protrusions in radial directions and being disposed radially outside the water-discharge protrusions,
the outer labyrinth lip including a curved surface or an inclined surface, such that the more radially inward a position is of the curved surface or the inclined surface, the more distant the position is from the flange of the inner member,
the water-discharge protrusions being supported by the inner member, each water-discharge protrusion including a curved surface or an inclined surface, such that the more radially inward a position is of the curved surface or the inclined surface, the more distant the position is from the flange of the inner member, the curved surface or the inclined surface of the water-discharge protrusions facing the curved surface or the inclined surface of the outer labyrinth lip.

According to this clause, since each of the outer labyrinth lip and the water-discharge protrusions include either the curved surface or the inclined surface, there is little likelihood of entry of foreign matter into the space between the annular part and the flange from the outside. Moreover, the more radially outward a position is of the curved surface or the inclined surface of the water-discharge protrusions, the closer the position is to the flange. Accordingly, an ability to discharge water is high.

### Clause 12

The sealing structure according to any one of Clauses 10 to 11, wherein the circular protrusion includes an inner inclined surface disposed radially inside the inclined surface of the circular protrusion.

According to this clause, water drops are able to readily flow out of the space upon start of rotation of the rotatable member and upon stop of rotation of the rotatable member.

### Clause 13

The sealing structure according to any one of Clauses 10 to 12, wherein each of the water-discharge protrusions includes two inclined side surfaces that intersect at an acute angle with two rotational directions in which at least one of the inner member and the outer member respectively rotates.

According to this clause, since the two inclined side surfaces intersect at an acute angle with the two rotational directions, each of the inclined side surfaces promotes smooth flow of water in either rotational direction. Thus, the sealing device can be used in either rotational direction.

### Clause 14

The sealing structure according to any one of Clauses 10 to 13, wherein a length of each of the water-discharge protrusions in the rotational direction is greater than a length of each of the water-discharge protrusions in radial directions of the sealing member.

According to this clause, even if hard foreign matter collides with and damages the water-discharge protrusions, or the water-discharge protrusions are worn by water flow, the entirety of the water-discharge protrusions 40 does not deteriorate in a short period of time. Consequently, the water-discharge protrusions have a long service life.

### Clause 15

The sealing structure according to any one of Clauses 10 to 14, wherein the space into which the multiple water-discharge protrusions protrude communicates with the atmosphere.

According to this clause, air flow into the interior of the space promotes outflow of water from the space.

### REFERENCE SYMBOLS

1: Hub bearing
4: Hub (inner member)
4A: Outer peripheral surface of cylindrical part 4B: Flange surface
6: Inner race (inner member)
8: Outer race (outer member)
8A: End portion
8B: End portion
18: Outboard side flange
20: Sealing device (sealing member)
21: Sealing device
24: First sealing member
24A: Cylindrical part
24B: Annular part
24C, 24D: Radial lip
26: Second sealing member
28: Elastic ring
30: Rigid ring
32: Elastic ring
34: Rigid ring
34A: Sleeve part
34B: Flange part
36: Clearance
40, 55: Water-discharge protrusion
42: Space
40C, 55C, 55D: Inclined side surface
40G, 55G: Curved surface
50: Curved Surface
52: Circular protrusion
52A: Inclined surface
52B: Inner inclined surface
55: Water-discharge protrusion
60: Rotational sealing member
64: Elastic ring
64A: Annular part
66: Rigid ring
72: Radial lip
74: Axial lip
80: Clearance
82: Space
86: Elastic ring
92: Outer labyrinth lip
92A: Curved surface
95: Circular protrusion
95A: Inclined surface
95B: Inner inclined surface

## Claims

1. A sealing device disposed between an inner member and an outer member that rotate relative to each other, and that acts to seal a gap between the inner member and the outer member, the sealing device comprising:
a first sealing member to be mounted to the outer member, the first sealing member comprising an annular part that extends radially inward toward the inner member; and
a second sealing member to be mounted to the inner member, the second sealing member comprising a flange part that extends radially outward and faces the annular part of the first sealing member,
an annular circular protrusion being supported by the second sealing member and protruding toward the annular part of the first sealing member, the circular protrusion comprising an inclined surface, such that a more radially inward a position is of the inclined surface, a more distant the position is from the flange part of the second sealing member,
multiple water-discharge protrusions protruding from the inclined surface of the circular protrusion into a space between the annular part of the first sealing member and the flange part of the second sealing member and being arranged in a circumferential direction,
each of the water-discharge protrusions comprising an inclined side surface that intersects at an acute angle with a rotational direction in which at least one of the inner member and the outer member rotates.

2. The sealing device according to claim 1, wherein the second sealing member further comprises a cylindrical sleeve part that surrounds the inner member, and wherein the first sealing member comprises two radial lips formed from an elastic material that extends toward the sleeve part of the second sealing member.

3. The sealing device according to claim 1 or claim 2, wherein no portion of the first sealing member is in contact with the flange part of the second sealing member.

4. The sealing device according to any one of claims 1 to 3, wherein the first sealing member comprises a curved surface or an inclined surface, such that the more radially inward a position is of the curved surface or the inclined surface, the more distant the position is from the flange part of the second sealing member,
each of the water-discharge protrusions comprising a curved surface or an inclined surface, such that the more radially inward a position is of the curved surface or the inclined surface, the more distant the position is from the flange part of the second sealing member, the curved surface or the inclined surface of the water-discharge protrusions facing the curved surface or the inclined surface of the first sealing member.

5. The sealing device according to any one of claims 1 to 4, wherein the circular protrusion comprises an inner inclined surface disposed radially inside the inclined surface of the circular protrusion.

6. The sealing device according to any one of claims 1 to 5, wherein each of the water-discharge protrusions comprises two inclined side surfaces that intersect at an acute angle with two rotational directions in which at least one of the inner member and the outer member respectively rotates.

7. The sealing device according to any one of claims 1 to 6, wherein a length of each of the water-discharge protrusions in the rotational direction is greater than a length of each of the water-discharge protrusions in radial directions of the first sealing member and the second sealing member.

8. The sealing device according to any one of claims 1 to 7, wherein the space into which the water-discharge protrusions protrude communicates with an atmosphere.
